(19) Europäisches Patentamt
European Patent Office
Office européen des brevets

(11) **EP 2 223 763 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(51) Int Cl.:
*B23D 45/00* (2006.01)       *B23D 61/02* (2006.01)
*B23D 61/12* (2006.01)       *C22C 38/22* (2006.01)
*C22C 38/24* (2006.01)       *C22C 38/30* (2006.01)

(21) Anmeldenummer: **10450004.6**

(22) Anmeldetag: **20.01.2010**

(54) **Bimetallsäge**

Bimetallic saw

Scie bilame

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.02.2009 AT 2662009**

(43) Veröffentlichungstag der Anmeldung:
**01.09.2010 Patentblatt 2010/35**

(73) Patentinhaber: **BÖHLER Edelstahl GmbH & Co KG**
**8605 Kapfenberg (AT)**

(72) Erfinder: **Caliskanoglu, Dr. Devrim**
**8600 Bruck/Mur (AT)**

(74) Vertreter: **Wildhack, Andreas**
**Wildhack & Jellinek**
**Patentanwälte OG**
**Landstrasser Hauptstraße 50**
**1030 Wien (AT)**

(56) Entgegenhaltungen:
**EP-A1- 1 024 208      DE-U1- 9 211 285**
**US-A1- 2003 152 477**

**Beschreibung**

Die Erfindung bezieht sich auf eine Bimetallsäge, gebildet aus einem Stützteil aus einem Vergütungsstahl und einem durch Schweißung mit diesem verbundenen Schneid- oder Zahnspitzenteil aus Werkzeugstahl mit einer durch thermisches Vergüten hergestellten Härte von 800 HV bis 950 HV.

Von Sägen für eine schnitterzeugende Abspanung von insbesondere metallischen Werkstoffen werden im Wesentlichen eine hohe Leistung bzw. Schnitttiefe je Verschublänge, ein möglichst ebener Schnitt, also kein sog. Auswandern des Sägeblattes von der vorgesehenen Schnittrichtung, eine hohe Standzeit und eine weitestgehende Unempfindlichkeit gegen Anstellungsänderungen des Sägeblattes am Werkstück, zB. bei einer handgeführten Säge, gefordert.

Um den Güteforderungen insgesamt zu entsprechen, sind die Sägeblätter oder Sägebänder in Bimetallausführung durch ein die Schneidkanten bildendes Schneidteil aus Schnellarbeitsstahl mit hoher Härte und hoher Verschleiß- bzw. Abriebfestigkeit erstellt, wobei auch ausreichend hohe Zähigkeit des Schneidmaterials und der Schmelzschweißverbindung mit dem Trägerband gegeben sein muss, um einen Bruch eines Zahnes mit Sicherheit zu vermeiden. Solche Sägeblätter sind zum Beispiel aus der Patentanmeldung EP 1 024 208 A1 bekannt. Im Falle, dass nur ein Zahn aus der Zahnreihe bricht, müssen die Folgezähne, oder muss der Folgezahn, ein übermäßiges Abspanvolumen bewältigen, was in der Folge meist zu einem Totalausfall des Sägeblattes wegen örtlicher Überlastung führt.

Das Stützteil oder Trägerband ist den Anforderungen entsprechend mit Vorteil aus einem Vergütungsstahl mit ausreichender Zugfestigkeit, hoher Biegewechselfestigkeit mit geringster Rissbildungsneigung erstellt. Wie oben erwähnt ist eine hohe Güte und Zähigkeit der Schmelzschweißverbindung mit dem Schneidmaterial von wesentlicher Bedeutung.

Um eine besonders hohe Schnittleistung einer Bimetallsäge zu erreichen, ist es bekannt, das Schneidteil oder die Zahnspitzen aus Schnellstahl der Marke HS 2-10-1-8 zu bilden. Bei Anwendung einer gezielt abgestimmten Vergütungstechnologie können mit obigem Schnellstahlwerkstoff eine hohe Schnitttiefe je Verschublänge, ein ebener Schnitt und eine hohe Schneidhaltigkeit der Zähne der Säge erreicht werden.

Allerdings ist trotz eines Gehaltes von ca. 7.7 bis 8.3 Gew.-% Co in der Legierung, welches Element auch im Hinblick auf eine hohe Werkstoffzähigkeit wirkt, insbesondere bei nicht hochexakt geführten Sägeblättern ein Brechen von Zähnen oder der Schweißverbindung mit dem Träger nicht in ausreichendem Maße verhinderbar, was letztlich zum Versagen des Sägeblattes führen kann.

Weiters sind, um obige Nachteile zu verhindern, Bimetallsägen mit einem Schneidteil aus Schnellarbeitsstahl vom Typ HS 1-5-1-8 bekannt, wobei um der Bruchgefahr zu begegnen, ein etwa gleicher Co-Gehalt von 7.7 bis 8.3 Gew.-% in der Legierung gegeben ist. Mit obigem Schnellstahltyp wurde die Bruchgefahr der Schneidelemente wirksam weitgehend ausgeschaltet. Als Nachteil haben sich jedoch eine geringere Härte und insbesondere eine geringere Verschleißfestigkeit der Schneidspitzen herausgestellt, was zu einer geringeren Standzeit des Sägeblattes im Betrieb mit einem Auswandern desselben aus der gewünschten Schnittrichtung führte.

In Kenntnis des Standes der Technik lag der Erfindung die Aufgabe zugrunde, eine Schneidstahllegierung anzugeben, welche im vergüteten Zustand eine hohe Zähigkeit und Härte aufweist, wobei die Härte und die Verschleißfestigkeit durch die Austenitisierungstemperatur und die Anlassbehandlung leicht in gewünschtem Maß einstellbar sind und mit einem Trägerwerkstoff mit hoher Biegewechselfestigkeit und Zugfestigkeit frei von versprödeten Phasen oder Bereichen durch Schmelzschweißen verbindbar ist.

Diese Aufgabe wird erfindungsgemäß dadurch gelöst, dass der Werkzeugstahl eine Zusammensetzung aufweist von in Gew.-%

| | | | | |
|---|---|---|---|---|
| Kohlenstoff (C) | 0.85 | bis | | 0.97 |
| Silicium (Si) | 0.15 | bis | | 0.35 |
| Mangan (Mn) | 0.20 | bis | | 0.35 |
| Phosphor (P) | | max | | 0.025 |
| Schwefel (S) | | max | | 0.005 |
| Chrom (Cr) | 3.80 | bis | | 4.60 |
| Molybdän (Mo) | 6.40 | bis | | 7.30 |
| Vanadin (V) | 0.80 | bis | | 1.25 |
| Wolfram (W) | 1.05 | bis | | 1.75 |
| Cobalt (Co) | 4.60 | bis | | 5.40 |
| gegebenenfalls | | | | |
| Niob (Nb) + Titan | (Ti) + | Tantal | (Ta) bis 0.90 | |
| Stickstoff (N) | | bis | | 0.20 |

Eisen (Fe) und erschmelzungsbedingte Begleitelemente und Verunreinigungen als Rest.

Die durch den erfindungsgemäßen Werkzeugstahl erreichten Vorteile sind im Wesentlichen darin zu sehen, dass durch die Legierungszusammensetzung im Hinblick auf die Abstimmung der Kohlenstoffaktivität der jeweils karbidbildenden Elemente und des Kohlenstoffgehaltes das Verschleißverhalten einerseits und andererseits die Zähigkeit und Werkstoffhärte auf die Verwendung bei einer Bimetallsäge anforderungsgemäß ausgerichtet bzw. optimiert sind.

Mittels der in engen Grenzen vorgesehenen Gehalte an Kohlenstoff und karbidbildenden Elementen jeweils in den Konzentrationsbereichen der Schneidlegierung kann beim Vergüten durch die Wahl der Härtetemperatur der Anteil an Karbidauflösung im Austenit und beim Anlassen die Sekundärhärtesteigerung in gewünschtem Ausmaß gewählt und auf die Produkteigenschaften ausgerichtet werden. Für den Fachmann war es höchst überraschend, dass auch bei einem Absenken der Co-Konzentration im erfindungsgemäßen Schneidwerkstoff dessen hohe Zähigkeit und Festigkeit erhalten werden kann und das Verschleißverhalten verbessert ist.

Legierungstechnisch wurde gefunden, dass aufgrund der Reaktionskinetik bei einer Kohlenstoffkonzentration in engen Grenzen von 0.85 bis 0.97 Gew.-% nur Gehalte in Gew.-% von Cr 3.8 bis 4.6, Mo 6.4 bis 7.3, V 0.8 bis 1.25 und W 1.05 bis 1.75 in der Legierung bei Wechselwirkung dieser Elemente bei der Karbidbildung zu einem gewünschten Gehalt an stabilen verschleißhemmenden Karbiden in einer durch die Vergütung in Abhängigkeit von der Härtetemperatur hartzähen Matrix mit einer Härte von größer 800 HV führen können.

Um die Matrixhärtung auf einen Wert von über 800 HV sicherzustellen, ist es wichtig, dass der Summengehalt an den effizienten monokarbidbildenden Elementen Nb + Ti + Ta auf einen Wert auf höchstens 0.9 Gew.-% limitiert ist. Eine Begrenzung des Stickstoffgehaltes auf höchstens 0.2 Gew.% vermeidet eine unerwünschte Nitridbildung und eine nachteilige Änderung der Karbidformen.

Die Gebrauchseigenschaften einer Bimetallsäge bei einer Schnitterstellung können legierungstechnisch weiter optimiert werden, wenn ein oder mehrere Element(e) des Werkzeugstahles eine Konzentration aufweist (aufweisen) in einem Bereich von in Gew.-%

| Kohlenstoff (C) | 0.86 | bis | 0.95, insbesondere | 0.88 | bis | 0.93 |
| Silicium (Si) | 0.20 | bis | 0.30 | | | |
| Mangan (Mn) | 0.25 | bis | 0.30 | | | |
| Chrom (Cr) | 3.90 | bis | 4.50, insbesondere | 4.00 | bis | 4.40 |
| Molybdän (Mo) | 6.50 | bis | 7.25, insbesondere | 6.65 | bis | 7.15 |
| Vanadin (V) | 0.90 | bis | 1.15, insbesondere | 0.95 | bis | 1.10 |
| Wolfram (W) | 1.15 | bis | 1.65, insbesondere | 1.20 | bis | 1.60 |
| Cobalt (Co) | 4.70 | bis | 5.30, insbesondere | 4.75 | bis | 5.25 |
| Niob (Nb) | | bis | 0.80, vorzugsweise | 0.01 | bis | 0.50 |
| Stickstoff (N) | | bis | 0.08, | | | |

Wenn ein oder mehrere Verunreinigungselement(e) des Werkzeugstahles eine maximale Konzentration aufweist (aufweisen) von in Gew.-%

| Wasserstoff (H) | max | 5ppm, vorzugsweise | max | 3ppm |
| Blei (Pb) | max | 0.002, vorzugsweise | max | 0.001 |
| Arsen (As) | max | 0.05, vorzugsweise | max | 0.04 |
| Zinn (Sn) | max | 0.05, vorzugsweise | max | 0.04 |

können besonders vorteilhafte Langzeiteigenschaften im Hinblick auf eine gute Schneidhaltigkeit der Zahnelemente und auf eine Vermeidung von Brüchen derselben durch Belastungswechsel erreicht werden.

Von gleichrangiger Bedeutung für die Güte von Bimetallsägen und deren hohe Standzeit im Einsatz ist das Verhalten des Stützteiles und der Verbindungsschweißung desselben mit dem Schneidteil. In diesem Zusammenhang ist zu berücksichtigen, dass das Stützteil mit der Schweißnaht die gleiche Vergütetechnologie erfährt wie diese für das Schneidteil gewählt wird, um eine hohe Härte und Verschleißfestigkeit bei guter Zähigkeit des erfindungsgemäßen Werkzeugstahls zu erreichen. Somit ist eine Zusammensetzung des Trägerwerkstoffes zu finden und für die Bimetallsäge vorzusehen, welche beim Vergüten des Schneidwerkstoffes die gewünschten, mechanischen Eigenschaften bei Vermeidung von Sprödbereichen im Schweißbereich erbringt.

Bei einer erfindungsgemäßen Bimetallsäge mit einer neuen Schneidstahllegierung ist vorgesehen, dass das Stützteil aus einer Legierung mit Gehalten in Gew.-% von

| Kohlenstoff (C) | über | 0.22, | geringer | 0.62 |
| Silicium (Si) | über | 0.15, | geringer | 0.85 |
| Mangan (Mn) | über | 0.30, | geringer | 1.20 |
| Chrom (Cr) | über | 0.90, | geringer | 4.80 |
| Molybdän (Mo) | | | geringer | 0.40 |
| Vanadin (V) | | | geringer | 0.22 |
| Wolfram (W) | | | geringer | 0.95 |

Eisen (Fe) und erschmelzungsbedingte Begleitelemente und Verunreinigungen als Rest mit der Maßgabe gebildet ist, dass die Kalkulation (% Mo plus % W/2) gebrochen durch % Vanadin einen Wert größer als (0.85), jedoch kleiner als (7.21) ergibt.

$$0.85 < \frac{\% \text{ Mo} + \% \text{ W/2}}{\% \text{ V}} < 7.21$$

Derart kann eine hohe Gesamtgüte des Sägewerkzeuges und somit eine lange Einsatzdauer bei starker Belastung bei der Schnitterzeugung erreicht werden.

Bei präzisierter Werkstoffwahl, nach welcher das Stützteil die Legierungselemente in Gew.-%

| Kohlenstoff (C) | 0.30 | bis | 0.50 |
| Mangan (Mn) | 0.45 | bis | 1.00 |
| Chrom (Cr) | 0.70 | bis | 1.50 |
| Molybdän (Mo) | 0.10 | bis | 0.40 |

enthält, sind weiters verbesserte Langzeiteigenschaften erreichbar.

Im Folgenden soll die Erfindung anhand von Werkstoffuntersuchungen und anhand von praxisnahen Erprobungen näher dargelegt werden.

Blöcke aus den Schneidteillegierungen A (HS 2-10-1-8), B (HS 1-5-1-8), einer erfindungsgemäßen Legierung C (Böhler S511) und einer erfindungsgemäßen, hochreinen Legierung D (Böhler S511-So) sowie einem Stützteilstahl wurden mit einer chemischen Zusammensetzung gemäß Tab. 1 hergestellt.

Tab.1

| Legierung | A (HS 2-10-1-8) | B (HS 1-5-1-8) | C (Böhler S511) | D (Böhler S511-So) | Stützteil |
|---|---|---|---|---|---|
| C | 1,07 | 0,74 | 0,91 | 0,90 | 0,41 |
| Si | 0,25 | 0,28 | 0,25 | 2,22 | 0,37 |
| Mn | 0,28 | 0,22 | 0,28 | 2,30 | 0,49 |
| Cr | 3,80 | 4,14 | 4,19 | 4,11 | 2,11 |
| Mo | 9,51 | 5,01 | 6,92 | 6,89 | 0,28 |
| V | 1,18 | 1,03 | 1,02 | 1,01 | 0,18 |
| W | 1,49 | 1,00 | 1,41 | 1,39 | 0,74 |
| Co | 8,01 | 8,04 | 5,00 | 4,99 | 0,04 |
| Nb | | | | 0,26 | < 0,05 |
| N | | | | 0,03 | 0,006 |
| H | | | | < 0,004 | |
| Pb | | | | 0,0008 | |

(fortgesetzt)

| Legierung | A (HS 2-10-1-8) | B (HS 1-5-1-8) | C (Böhler S511) | D (Böhler S511-So) | Stützteil |
|---|---|---|---|---|---|
| As | | | | < 0,001 | |
| Sn | | | | < 0,002 | < 0,01 |
| Sb | | | | | < 0,004 |

Aus den Blöcken A, B, C und D erfolgten einerseits eine Herstellung von Proben für Werkstoffuntersuchungen und andererseits eine Walzung zu Flachdraht mit der Querschnittsabmessung 1.0mm x 0.63mm.

Der Stützteilblock wurde durch Walzung zu einem Flachband für Sägenstützteile mit einer Dicke von 1 mm verformt.

Durch zusatzwerkstofffreie Schweißung bzw. Elektronenstrahlschweißung in Längsrichtung erfolgte ein Verbinden des Flachdrahtes aus den jeweiligen Werkzeugstahllegierungen A bis D mit dem Trägerband bzw. dem Stützteil. Um Fehler bei einem Vergleich der Ergebnisse bei praktischen Erprobungen möglichst auszuschalten, war für alle Sägen ein Stützteil aus dem gleichen Block eingesetzt worden.

Vergütungstechnische Untersuchungen an Proben der Legierungen A bis C, bei welchen jeweils Härtetemperaturen von 1110°C, 1150°C und 1180°C und Anlassbehandlungen bei 540°C, 560°C und 580°C angewendet wurden, erbrachten die in Tab. 2 angegebenen Härtewerte in HV 10.

Tab.2

| Legierung | | | | A B C | | | | | |
|---|---|---|---|---|---|---|---|---|---|
| Härtetemp. | 1110°C | 11150°C | 1180°C | 1110°C | 1150°C | 1180°C | 1110°C | 1150°C | 1180°C |
| Anlasstemp. | | | | | | | | | |
| 540°C | 900 | 940 | 975 | 860 | 880 | 885 | 860 | 875 | 930 |
| 560°C | 815 | 925 | 950 | 830 | 870 | 870 | 830 | 850 | 910 |
| 580°C | 825 | 870 | 925 | 825 | 825 | 826 | 790 | 810 | 878 |

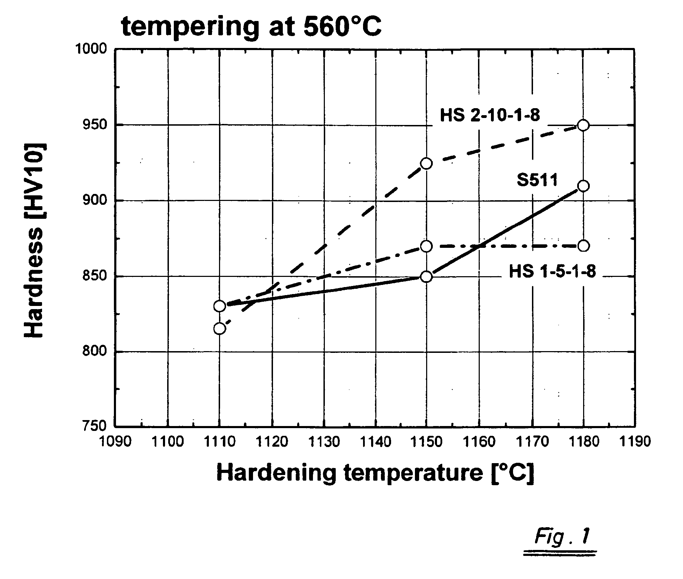

Die Ergebnisse, die auch Fig. 1 für eine Anlasstemperatur von 560°Cg entnehmbar sind, zeigen, dass bei der Legierung A steigende Härtetemperaturen auch jeweils ansteigende Härtewerte bei den unterschiedlichen Anlassbehandlungen im Bereich 540°C bis 580°C bewirken.

Die Härtewerte einer Schneidlegierung B steigen bis zu einer

Austenitisierungstemperatur von ca. 1150°C, wobei höhere Temperaturwerte keine Härtesteigerung mehr bewirken können, der Verschleiß jedoch vergrößert ist.

Die erfindungsgemäße Legierung C zeigt auch bei einem Überschreiten einer Härtetemperatur von 1150°C eine Steigerung der Härtewerte nach dem Anlassen und derart einen hohen Verschleißwiderstand.

Mit den Schneidwerkstoffen aus den Legierungen A,B,C,D wurden unter Verwendung von Stützteilen jeweils Sägen hergestellt, vergütet und sowohl in Sägeeinrichtungen als auch durch Handsägen erprobt.

Ergebnisse der Versuche mit Bimetallsägen mit einem Schneidteil aus der Legierung A gemäß Tab. 1 zeigten eine gute Schneidleistung und einen geringen Verschleiß der Zahnspitzen. Allerdings waren Zahnbrüche, insbesondere bei Handsägen, festzustellen, die mit sinkender Anlasstemperatur zunahmen und derart die Einsatzdauer wesentlich verringerten, obwohl die Restzähne keinen wesentlichen Verschleiß zeigten.

Sägen mit einem Schneidteil aus der Legierung B wurden bei einer Temperatur zwischen 1110°C und 1150°C gehärtet und anschließend angelassen, weil aufgrund der Vorversuche ersichtlich war, dass höhere Härtetemperaturen keinen weiteren Anstieg der Härte, jedoch eine ungünstige Grobkornbildung im Gefüge bewirken.

Bei den praktischen Versuchen mit einer Sägeschnitterstellung zeigten sich sehr wenige Zahnbrüche oder Zahnausbrüche, jedoch war im Vergleich nach kürzerer Zeit ein bemerkenswerter Verschleiß der Schneidkanten der Bimetallsäge festzustellen, der in der Folge zu einem Auswandern des Trennungsschnittes von einer vorgesehenen Teilungsebene führte.

Eine erfindungsgemäße Bimetallsäge mit einem Schneidteil aus der Legierung C war betreffend die Einsatzzeit im schweren Betrieb auch bei variierender Anstellung an das Werkstück bzw. bei Handführung den Sägen mit den Legierungen A sowie B als Zahnwerkstoff deutlich überlegen. Es konnten sowohl Brüche im Schneidteil als auch ein Verschleiß der Schneidkanten vermindert werden.

Untersuchungen mit einer erfindungsgemäßen Schneidlegierung D mit abgesenkten Gehalten an Verunreinigungselementen zeigten, dass derart eine Verbesserung der Materialzähigkeit erreicht werden kann, welche auch im Dauerbetrieb eine Werkstoffwechselfestigkeit bewirkt, die Materialbrüche praktisch ausschließt.

Die Entwicklungsarbeiten für einen verbesserten Vergütungsstahl als Stützteil einer Bimetallsäge führten zu einem Werkstoff mit einer chemischen Zusammensetzung gemäß Anspruch 4. Wesentlich dabei ist, dass die hexagonale oder trigonale Karbide vom Typ $Me_2C$ oder $Me_7C_3$ bildenden Elemente Mo und W in einem bestimmten Verhältnis zum Bildner von kubische Monokarbide erstellendem Element Vanadin in der Legierung vorliegen. Dadurch kann auch für hohe Härte- und Anlasstemperaturen eine Grobkombildung verhindert und ein Härteanstieg zur Einstellung der gewünschten Eigenschaften des Trägermaterials beim Vergüten des Schneidwerkstoffes erreicht werden. In der Konzentration begrenzte Verunreinigungselemente, wie in Anspruch 6 angegeben, erhöhen wesentlich die Dauerstandfestigkeit des Stützteiles.

Besonders vorteilhaft, insbesondere im Hinblick auf eine Steigerung der Biegewechselfestigkeit und eine sichere Vermeidung einer Rissinitiation kann es sein, wenn das Stützteil ein oder mehrere Verunreinigungselement(e) mit jeweils einem maximalen Gehalt von in Gew.-%

| | | | | | |
|---|---|---|---|---|---|
| Stickstoff (N) | max | 0.02, | vorzugsweise | max | 0.016 |
| Arsen (As) | max | 0.02, | vorzugsweise | max | 0.015 |
| Zinn (Sn) | max | 0.02, | vorzugsweise | max | 0.015 |
| Antimon (Sb) | max | 0.009, | vorzugsweise | max | 0.005 |

aufweist.

**Patentansprüche**

1. Bimetallsäge, gebildet aus einem Stützteil aus einem Vergütungsstahl und einem mit diesem durch Schweißung mit diesem verbundenen Schneidteil oder Zahnspitzenteil aus Werkzeugstahl mit einer durch thermisches Vergüten eingestellten Härte von 800 bis 950 HV 10, **dadurch gekennzeichnet, dass** der Werkzeugstahl eine Zusammensetzung aufweist von in Gew.-%

| | | | |
|---|---|---|---|
| Kohlenstoff (C) | 0.85 | bis | 0.97 |
| Silicium (Si) | 0.15 | bis | 0.35 |
| Mangan (Mn) | 0.20 | bis | 0.35 |
| Phosphor (P) | | max | 0.025 |
| Schwefel (S) | | max | 0.005 |
| Chrom (Cr) | 3.80 | bis | 4.60 |
| Molybdän (Mo) | 6.40 | bis | 7.30 |
| Vanadin (V) | 0.80 | bis | 1.25 |
| Wolfram (W) | 1.05 | bis | 1.75 |
| Cobalt (Co) | 4.60 | bis | 5.40 |

gegebenenfalls
Niob (Nb) + Titan (Ti) + Tantal (Ta) bis 0.90

| | | |
|---|---|---|
| Stickstoff (N) | bis | 0.20 |

Eisen (Fe) und erschmelzungsbedingte Begleitelemente und Verunreinigungen als Rest.

2. Bimetallsäge nach Anspruch 1, **dadurch gekennzeichnet, dass** ein oder mehrere Element(e) des Werkzeugstahles eine Konzentration aufweist (aufweisen) in einem Bereich von in Gew.-%

| | | | | | | | |
|---|---|---|---|---|---|---|---|
| Kohlenstoff (C) | 0.86 | bis | 0.95, | insbesondere | 0.88 | bis | 0.93 |
| Silicium (Si) | 0.20 | bis | 0.30 | | | | |
| Mangan (Mn) | 0.25 | bis | 0.30 | | | | |

(fortgesetzt)

| | | | | | | | |
|---|---|---|---|---|---|---|---|
| Chrom (Cr) | 3.90 | bis | 4.50, | insbesondere | 4.00 | bis | 4.40 |
| Molybdän (Mo) | 6.50 | bis | 7.25, | insbesondere | 6.65 | bis | 7.15 |
| Vanadin (V) | 0.90 | bis | 1.15, | insbesondere | 0.95 | bis | 1.10 |
| Wolfram (W) | 1.15 | bis | 1.65, | insbesondere | 1.20 | bis | 1.60 |
| Cobalt (Co) | 4.70 | bis | 5.30, | insbesondere | 4.75 | bis | 5.25 |
| Niob (Nb) | | bis | 0.80, | vorzugsweise | 0.01 | bis | 0.50 |
| Stickstoff (N) | | bis | 0.08 | | | | |

3. Bimetallsäge nach Anspruch 1 oder 2, **dadurch gekennzeichnet, dass** ein oder mehrere Verunreinigungselement (e) des Werkzeugstahles eine maximale Konzentration aufweist (aufweisen) von in Gew.-%

| | | | | | |
|---|---|---|---|---|---|
| Wasserstoff (H) | max | 5ppm, | vorzugsweise | max | 3ppm |
| Blei (Pb) | max | 0.002, | vorzugsweise | max | 0.001 |
| Arsen (As) | max | 0.05, | vorzugsweise | max | 0.04 |
| Zinn (Sn) | max | 0.05, | vorzugsweise | max | 0.04 |

4. Bimetallsäge nach einem der Ansprüche 1 bis 3, **dadurch gekennzeichnet, dass** das Stützteil aus einer Legierung mit Gehalten in Gew.-% von

| | | | | |
|---|---|---|---|---|
| Kohlenstoff (C) | über | 0.22, | geringer | 0.62 |
| Silicium (Si) | über | 0.15, | geringer | 0.85 |
| Mangan (Mn) | über | 0.30, | geringer | 1.20 |
| Chrom (Cr) | über | 0.90, | geringer | 4.80 |
| Molybdän (Mo) | | | geringer | 0.40 |
| Vanadin (V) | | | geringer | 0.22 |
| Wolfram (W) | | | geringer | 0.95 |

Eisen (Fe) und erschmelzungsbedingte Begleitelemente und Verunreinigungen als Rest
mit der Maßgabe gebildet ist, dass die Kalkulation % Cr plus (% Mo plus % W/2) gebrochen durch % Vanadin einen Wert größer als (0.85), jedoch kleiner als (7.21) ergibt.

$$0.85 < \frac{\% \text{ Mo} + \% \text{ W/2}}{\% \text{ V}} < 7,21$$

5. Bimetallsäge nach einem der Ansprüche 1 bis 4, **dadurch gekennzeichnet, dass** das Stützteil die Legierungselemente in Gew.-%

| | | | |
|---|---|---|---|
| Kohlenstoff (C) | 0.30 | bis | 0.50 |
| Mangan (Mn) | 0.45 | bis | 1.00 |
| Chrom (Cr) | 0.70 | bis | 1.50 |
| Molybdän (Mo) | 0.10 | bis | 0.40 |

enthält.

6. Bimetallsäge nach einem der Ansprüche 1 bis 5, **dadurch gekennzeichnet, dass** das Stützteil ein oder mehrere Verunreinigungselement(e) mit jeweils einem maximalen Gehalt von in Gew.-%

| | | | | | |
|---|---|---|---|---|---|
| Stickstoff (N) | max | 0.02, | vorzugsweise | max | 0.016 |
| Arsen (As) | max | 0.02, | vorzugsweise | max | 0.015 |

(fortgesetzt)

| | | | | | |
|---|---|---|---|---|---|
| Zinn (Sn) | max | 0.02, | vorzugsweise | max | 0.015 |
| Antimon (Sb) | max | 0.009, | vorzugsweise | max | 0.005 |

aufweist.

7. Bimetallsäge nach einem der Ansprüche 1 bis 6, **dadurch gekennzeichnet, dass** das Stützteil und das Schneidteil oder die Zahlspitzenteile durch zusatzwerkstofffreie Strahlschweißung, zB. Laserstrahl- oder Elektronenstrahl-Schweißung verbunden sind.

**Claims**

1. Bimetallic saw formed of a supporting portion of tempering steel, and, connected to it by welding, a cutting portion or tooth tip portion of tool steel having a hardness of 800 to 950 HV 10 adjusted by thermal hardening and tempering, **characterised in that** the tool steel has a composition in percent by weight of

| | | | | |
|---|---|---|---|---|
| carbon (C) | 0.85 | to | 0.97 | |
| silicon (Si) | 0.15 | to | 0.35 | |
| manganese (Mn) | 0.20 | to | 0.35 | |
| phosphorus (P) | | | 0.025 | in maximum |
| sulphur (S) | | | 0.005 | in maximum |
| chromium (Cr) | 3.80 | to | 4.60 | |
| molybdenum (Mo) | 6.40 | to | 7.30 | |
| vanadium (V) | 0.80 | to | 1.25 | |
| tungsten (W) | 1.05 | to | 1.75 | |
| cobalt (Co) | 4.60 | to | 5.40 | |

optionally

| | |
|---|---|
| niobium (Nb) + titanium (Ti) + tantalum (Ta) | up to 0.90 |
| nitrogen (N) | up to 0.20 |

the rest being iron (Fe) and companion elements and impurities conditional on melting.

2. Bimetallic saw according to claim 1, **characterised in that** one or more element(s) of the tool steel has (have) a concentration in % by weight in a range of

| | | | | | | |
|---|---|---|---|---|---|---|
| carbon (C) | 0.86 | to | 0.95, particularly | 0.88 | to | 0.93 |
| silicon (Si) | 0.20 | to | 0.30 | | | |
| manganese (Mn) | 0.25 | to | 0.30 | | | |
| chromium (Cr) | 3.90 | to | 4.50, particularly | 4.00 | to | 4.40 |
| molybdenum (Mo) | 6.50 | to | 7.25, particularly | 6.65 | to | 7.15 |
| vanadium (V) | 0.90 | to | 1.15, particularly | 0.95 | to | 1.10 |
| tungsten (W) | 1.15 | to | 1.65, particularly | 1.20 | to | 1.60 |
| cobalt (Co) | 4.70 | to | 5.30, particularly | 4.75 | to | 5.25 |
| niobium | | up to | 0.80, preferably | 0.01 | to | 0.50 |
| nitrogen (N) | | up to | 0.08. | | | |

3. Bimetallic saw according to claim 1 or 2, **characterised in that** one or more impurity element(s) of the tool steel has (have) a maximum concentration in % by weight of

| | | | | | |
|---|---|---|---|---|---|
| hydrogen (H) | 5ppm | in maximum, | preferably | 3ppm | in maximum |
| lead (Pb) | 0.002 | in maximum, | preferably | 0.001 | in maximum |
| arsenic (As) | 0.05 | in maximum, | preferably | 0.04 | in maximum |
| tin (Sn) | 0.05 | in maximum, | preferably | 0.04 | in maximum. |

4. Bimetallic saw according to any of claims 1 to 3, **characterised in that** the supporting portion is formed of an alloy having contents in % by weight of

| | | | |
|---|---|---|---|
| carbon (C) | more than 0.22, | less than | 0.62 |
| silicon (Si) | more than 0.15, | less than | 0.85 |
| manganese (Mn) | more than 0.30, | less than | 1.20 |
| chromium (Cr) | more than 0.90, | less than | 4.80 |
| molybdenum (Mo) | | less than | 0.40 |
| vanadium (V) | | less than | 0.22 |
| tungsten (W) | | less than | 0.95 |

the rest being iron (Fe) and companion elements and impurities conditional on melting
provided that the calculation of %Cr plus (%Mo plus %W/2) divided by % of vanadium results in a value that is larger than (0.85), but is smaller than (7.21)

$$0.85 < \frac{\%Mo + \%W/2}{\%V} < 7.21.$$

5. Bimetallic saw according to any of claims 1 to 4, **characterised in that** the supporting portion contains the following alloying elements in % by weight

| | | | |
|---|---|---|---|
| carbon (C) | 0.30 | to | 0.50 |
| manganese (Mn) | 0.45 | to | 1.00 |
| chromium (Cr) | 0.70 | to | 1.50 |
| molybdenum (Mo) | 0.10 | to | 0.40. |

6. Bimetallic saw according to any of claims 1 to 5, **characterised in that** the supporting portion comprises one or more impurity element(s) having a respective maximum contents in % by weight of

| | | | | | |
|---|---|---|---|---|---|
| nitrogen (N) | 0.02 | in maximum, | preferably | 0.016 | in maximum |
| arsenic (As) | 0.02 | in maximum, | preferably | 0.015 | in maximum |
| tin (Sn) | 0.02 | in maximum, | preferably | 0.015 | in maximum |
| antimony (Sb) | 0,009 | in maximum, | preferably | 0,005 | in maximum. |

7. Bimetallic saw according to any of claims 1 to 6, **characterised in that** the supporting portion and the cutting portion or the tooth tip portions are interconnected by beam welding free of any weld filler, e.g. by laser beam welding or electron-beam welding.

**Revendications**

1. Scie bilame formée d'une partie portante d'un acier d'amélioration, et, reliée à celle-ci par une soudure, une partie de coupe ou une partie de pointe de dent d'un acier à outils d'une dureté de 800 à 950 HV 10 ajustée par un traitement thermique, **caractérisée en ce, que** l'acier à outils comprend une composition en pourcentage en poids de

| | | | |
|---|---|---|---|
| carbone (C) | 0,85 | à | 0,97 |
| silicium (Si) | 0,15 | à | 0,35 |
| manganèse (Mn) | 0,20 | à | 0,35 |
| phosphore (P) | | 0,025 | en maximum |
| soufre (S) | | 0,005 | en maximum |
| chrome (Cr) | 3,80 | à | 4,60 |
| molybdène (Mo) | 6,40 | à | 7,30 |
| vanadium (V) | 0,80 | à | 1,25 |
| tungstène (W) | 1,05 | à | 1,75 |
| cobalt (Co) | 4,60 | à | 5,40 |

le cas échéant

| | | |
|---|---|---|
| niobium (Nb) + titane (Ti) + tantale (Ta) | jusqu'à 0,90 |
| azote (N) | jusqu'à 0,20 |

le reste étant du fer (Fe) ainsi que des éléments d'accompagnement et d'impureté conditionné par l'élaboration.

**2.** Scie bilame selon la revendication 1, **caractérisée en ce, qu'**un ou plusieurs élément(s) de l'acier à outils a (ont) une concentration dans une gamme en % en poids de

| | | | | | | | |
|---|---|---|---|---|---|---|---|
| carbone (C) | 0,86 | à | 0,95, | particulièrement | 0,88 | à | 0,93 |
| silicium (Si) | 0,20 | à | 0,30 | | | | |
| manganèse (Mn) | 0,25 | à | 0,30 | | | | |
| chrome (Cr) | 3,90 | à | 4,50, | particulièrement | 4,00 | à | 4,40 |
| molybdène (Mo) | 6,50 | à | 7,25, | particulièrement | 6,65 | à | 7,15 |
| vanadium (V) | 0,90 | à | 1,15, | particulièrement | 0,95 | à | 1,10 |
| tungstène (W) | 1,15 | à | 1,65, | particulièrement | 1,20 | à | 1,60 |
| cobalt (Co) | 4,70 | à | 5,30, | particulièrement | 4,75 | à | 5,25 |
| niobium | | jusqu'à | 0,80, | de préférence | 0,01 | à | 0,50 |
| azote (N) | | jusqu'à | 0,08. | | | | |

**3.** Scie bilame selon la revendication 1 ou 2, **caractérisée en ce, qu'**un ou plusieurs élément(s) d'impureté de l'acier à outils a (ont) une concentration maximale en % en poids de

| | | | | | |
|---|---|---|---|---|---|
| hydrogène (H) | 5ppm | en maximum, | de préférence | 3ppm | en maximum |
| plomb (Pb) | 0,002 | en maximum, | de préférence | 0,001 | en maximum |
| arsenic (As) | 0,05 | en maximum, | de préférence | 0,04 | en maximum |
| étain (Sn) | 0,05 | en maximum, | de préférence | 0,04 | en maximum. |

**4.** Scie bilame selon une quelconque des revendications 1 à 3, **caractérisée en ce, que** la partie portante est formée d'un alliage ayant des teneurs en % en poids de

| | | | |
|---|---|---|---|
| carbone (C) | plus de 0,22, | moins de | 0,62 |
| silicium (Si) | plus de 0,15, | moins de | 0,85 |
| manganèse (Mn) | plus de 0,30, | moins de | 1,20 |
| chrome (Cr) | plus de 0,90, | moins de | 4,80 |
| molybdène (Mo) | | moins de | 0,40 |
| vanadium (V) | | moins de | 0,22 |

(suite)

| tungstène (W) | moins de | 0,95 |
|---|---|---|

le reste étant du fer (Fe) ainsi que des éléments d'accompagnement et d'impureté conditionné par l'élaboration, à la condition, que le calcul de %Cr plus (%Mo plus W/2) divisé par % de vanadium résulte en une valeur plus grande que (0,85), mais plus petite que (7,21)

$$0{,}85 < \frac{\%Mo + \%W/2}{\%V} < 7{,}21.$$

**5.** Scie bilame selon une quelconque des revendications 1 à 4, **caractérisée en ce, que** la partie portante contient les éléments d'alliage en % en poids de

| carbone (C) | 0,30 | à | 0,50 |
|---|---|---|---|
| manganèse (Mn) | 0,45 | à | 1,00 |
| chrome (Cr) | 0,70 | à | 1,50 |
| molybdène (Mo) | 0,10 | à | 0,40. |

**6.** Scie bilame selon une quelconque des revendications 1 à 5, **caractérisée en ce, que** la partie portante comprend un ou plusieurs élément(s) d'impureté avec un teneur maximal respectif en % en poids de

| azote (N) | 0,02 | en maximum, | de préférence | 0,016 | en maximum |
|---|---|---|---|---|---|
| arsenic (As) | 0,02 | en maximum, | de préférence | 0,015 | en maximum |
| étain (Sn) | 0,02 | en maximum, | de préférence | 0,015 | en maximum |
| antimoine (Sb) | 0,009 | en maximum, | de préférence | 0,005 | en maximum. |

**7.** Scie bilame selon une quelconque des revendications 1 à 6, **caractérisée en ce, que** la partie portante et la partie de coupe ou les parties de pointe de dent sont reliées par soudage par rayonnement sans matériau d'apport, par exemple par soudage à rayon laser ou soudage par bombardement électronique.

## tempering at 560°C

Chart — X-axis: Hardening temperature [°C] (1090 to 1190); Y-axis: Hardness [HV10] (750 to 1000). Curves labeled HS 2-10-1-8, S511, HS 1-5-1-8.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1024208 A1